Europäisches Patentamt

European Patent Office

Office européen des brevets

(11) Veröffentlichungsnummer: **0 374 667**
**A1**

## (12) EUROPÄISCHE PATENTANMELDUNG

(21) Anmeldenummer: **89122793.6**

(22) Anmeldetag: **10.12.89**

(51) Int. Cl.⁵: **B28B 21/80, B28B 21/56, F16L 21/00, F16L 9/08, F16L 25/00**

(30) Priorität: **23.12.88 CH 4787/88**

(43) Veröffentlichungstag der Anmeldung:
**27.06.90 Patentblatt 90/26**

(84) Benannte Vertragsstaaten:
**AT BE CH DE ES FR GB IT LI LU NL SE**

(71) Anmelder: **Peter Hartmann Beteiligungen GmbH**
**Freigutstrasse 4**
**CH-8027 Zürich(CH)**

Anmelder: **VON ROLL AG**

**CH-4563 Gerlafingen(CH)**

(72) Erfinder: **Hartmann, Peter**
**General-Wille-Strasse 115**
**CH-8706 Feldmeilen(CH)**
Erfinder: **Bergmann, Bernhard**
**Rainweg 6**
**CH-4710 Balsthal(CH)**

(74) Vertreter: **EGLI-EUROPEAN PATENT ATTORNEYS**
**Horneggstrasse 4**
**CH-8008 Zürich(CH)**

(54) **Verfahren und Anlage zur Herstellung eines Verbundrohres in einer rotierenden Trommel.**

(57) In einer rotierenden Trommel (1) werden nacheinander die Komponenten eingebracht, welche die Schichten des Verbundrohres bilden. Zunächst wird eine Verstärkungsschicht (8) aus Kunststoff mit einer Faserarmierung eingebracht, wobei die Enden der Trommel (1) durch Ringe begrenzt werden. Dann wird die Kernschicht (16) aus Beton eingebracht, wobei durch an den Trommelenden befestigte Formringe die Länge der Kernschicht (16) gegenüber der Länge der Trommel (1) verkürzt wird. Dann werden die Formringe durch weitere Formringe (20, 21) ausgewechselt. Hierdurch entstehen beidseits der Kernschicht (16) zwei Ringräume (22, 23), die durch eine Muffenmasse (24, 25) von gleicher Zusammensetzung wir die Verstärkungsschicht (8) ausgefüllt wird. Es entsteht dadurch an dem einen Rohrende ein Muffenende (28) und am andern Rohrende ein Spitzende (30), die innerhalb der Wandstärke des Verbundrohres liegen. Nach Einbringen einer zweiten Verstärkungsschicht (26) ist die Herstellung des Verbundrohres beendet. Durch die gleichzeitige mit dem Aufbau des Verbundrohres erfolgende Herstellung der Muffenverbindungselemente (28, 30) wird eine zuverlässige und rationelle Herstellung des Verbundrohres mit seinen Muffenverbindungselementen (28, 30) erreicht. Durch das Anformen einer Schulter (33) am Spitzende (30) wird erreicht, dass beim Zusammenschieben zweier Verbundrohre das Muffenende (28) zentriert wird. Gleichzeitig entsteht ein Ringraum (34), in welchem eine elastische Dichtung (35) zur tropfdichten Abdichtung eingelegt werden kann.

FIG. 3

FIG. 5

## Verfahren und Anlage zur Herstellung eines Verbundrohres in einer rotierenden Trommel

Die Erfindung betrifft ein Verfahren zur Herstellung eines in einer rotierenden Trommel aus mehreren organischen und anorganischen Materialschichten aufgebauten Verbundrohres mit Muffenverbindungselementen an den Rohrenden, welches sowohl aussenwandseitig als auch innenwandseitig mit einer Verstärkungsschicht aus Kunststoff mit einer Faserarmierung und aus einer dazwischen liegenden Kernschicht aus anorganischem Material mit einem Binder, insbesondere Beton versehen ist.

Rohre, die aus nicht metallischen Materialien hergestellt werden, sind in verschiedenen Ausführungen bekannt. Solche Rohre weisen gegenüber aus metallischen Materialien hergestellten Rohren Vorteile auf, beispielsweise ein geringeres Gewicht und eine höhere Korrosionsfestigkeit. Wegen der letzteren Eigenschaft werden solche Rohre für die Fortleitung aggressiver Medien eingesetzt. Sie lassen sich vorteilhaft auch in Böden verlegen, in denen metallische Rohre einer starken Korrosion unterliegen.

Bekannt sind Rohre, die vollständig aus Kunststoffen hergestellt werden und entsprechende Eigenschaften dieser Kunststoffe eingesetzt werden können. Sie weisen ein geringes Gewicht und eine in den meisten Fällen ausreichende Festigkeit auf, sind jedoch verhältnismässig teuer. Aus diesem Grunde sind Anstrengungen unternommen worden, die Kosten solcher Rohre herabzusetzen, ohne dadurch die Eigenschaften der dabei verwendeten Kunststoffe zu beeinträchtigen.

Ein solches Rohr ist beispielsweise aus der EP 0 151 930 bekannt. Die Wand dieses Rohres setzt sich aus mehreren Schichten zusammen, die aus Kunststoff und anorganischen Materialien aufgebaut sind. Im wesentlichen besteht dieses Rohr aus einer Kernschicht aus Zementmörtel, die sowohl innenwandseitig als auch aussenwandseitig von je einer Verstärkungsschicht umgeben ist. Die beiden Verstärkungsschichten bestehen im wesentlichen aus einem Kunststoff, beispielsweise einem Polyester, der mittels Fasern, beispielsweise Glasfasern, armiert ist.

Solche Rohre weisen die gegenüber reinen Kunststoffrohren erwähnten Vorteile auf, d. h. sie sind kostengünstiger als reine Kunststoffrohre, sie weisen dieselben Korrosionseigenschaften wie das reine Kunststoffrohr auf und sind ebenfalls bezüglich ihres Gewichtes günstiger als metallische Rohre.

Damit solche Rohre mit den üblichen Verbindungselementen zusammengebaut werden können, sind in dem genannten Schutzrecht Hinweise enthalten, wie die Rohre mit Muffenverbindungselementen versehen werden können. Hierbei wird an dem einen Rohrende ein Muffenende angeformt, dessen Aussendurchmesser mindestens um die doppelte Wandstärke grösser ist als der Rohrdurchmesser. Der Platzbedarf für die Verlegung wird dadurch enorm gross und ist deshalb unwirtschaftlich. Zudem muss die rotierende Trommel, in welcher solche Rohre hergestellt werden, an einem Trommelende eine Formgebung entsprechend der vorgesehenen Muffe erhalten, was ebenfalls zusätzliche Kosten verursacht. Zwar ist in dem genannten Schutzrecht ein weiteres Rohr beschrieben, bei welchem auf eine Muffe mit einem grösseren Durchmesser als der Rohrdurchmesser verzichtet wird, jedoch wird hierzu zusätzlich ein metallischer Ring benötigt, der an dem einen Trommelende eingelegt und mit dem Rohrkörper verbunden wird. Eine gute Verbindung zwischen diesem Metallring und dem Rohrkörper ist jedoch sehr schwierig zu erreichen. Zudem ist der metallische Ring der Korrosion ausgesetzt, so dass der Vorteil des nichtmetallischen Rohrkörpers verloren geht. Aus diesem Grund hat sich diese Art der Rohrverbindung nicht einführen können.

Hier setzt die Erfindung ein, der die Aufgabe zugrunde liegt, ein Verfahren der eingangs beschriebenen Art so weiter auszugestalten, dass ein Verbundrohr mit Muffenverbindungselementen hergestellt werden kann, bei dem die Muffenverbindungselemente ebenfalls aus nichtmetallischen Materialien hergestellt sind und nicht über den Durchmesser des Rohrkörpers ragen sowie eine, mit der Festigkeit des Rohrkörpers vergleichbare Festigkeit zwischen den Muffenverbindungselementen und dem Rohrkörper aufweisen.

Diese Aufgabe wird gemäss der Erfindung dadurch gelöst, dass gleichzeitig mit dem schichtenweisen Aufbau des Rohrkörpers des Verbundrohres das eine Rohrende mit einem, einen Vorsprung aufweisenden Muffenende und das andere Rohrende mit einem, einen Rücksprung aufweisenden Spitzende versehen werden, wobei für das Formen der Rohrenden eine Muffenmasse verwendet wird, welche derjenigen der Verstärkungsschicht des Rohrkörpers entspricht.

Die Erfindung umfasst auch eine Anlage, mit welcher Verbundrohre mit Muffenverbindungselementen in optimaler Weise hergestellt werden können. Diese Aufgabe wird gemäss der Erfindung dadurch gelöst, dass über mindestens einer liegend gelagerten Trommel die für das Formen der Muffenverbindungselemente an den Rohrenden benötigten Formringe in einem Magazin gelagert sind und durch Handhabungsgeräte, von denen an jedem Trommelende mindestens ein Handhabungsgerät aufgestellt ist, nach einander entsprechend dem Aufbau des Verbundrohres zum Trommelende gebracht, auf der Trommel befestigt, ausgewechselt und wieder in das Magazin zurückgebracht werden.

Ein Ausführungsbeispiel der Erfindung ist in der Zeichnung dargestellt und nachfolgend beschrieben. Es zeigen

Fig. 1-4 Eine schematische Darstellung des schrittweisen Aufbaus eines Verbundrohres mit Muffenverbindungselementen in einer nur teilweise dargestellten rotierenden Trommel, wobei

Fig. 1 die Herstellung der Verbindungsschicht,

Fig. 2 das Einbringen der Kernschicht,

Fig. 3 das Herstellen der Muffenverbindungselemente und

Fig. 4 das Ausfahren des fertigen Verbundrohres aus der stillstehenden Trommel zeigt

Fig. 5 einen Teilschnitt einer fertigen, durch zwei Verbundrohre hergestellte Muffenverbindungen mit eingelegter Dichtung

Fig. 6 eine Frontansicht einer Anlage zur Herstellung von Verbundrohren,

Fig. 7 eine Seitenansicht der Anlage nach Figur 6, von innen

Fig. 8 einen Schnitt von zwei Formringen mit Halteelementen,

Fig. 9 eine Ansicht eines Formringgreifers,

Fig. 10 eine Seitenansicht, teilweise im Schnitt eines Greiferarmes und

Fig. 11 eine Seitenansicht der Halteelemente am Trommelumfang zur Halterung der Formringe an der Trommel.

Die Erfindung geht von der Ueberlegung aus, dass ein Verbundrohr, das im wesentlichen aus einer Kernschicht aus anorganischem Material und einer innenwandseitigen und einer aussenwandseitigen Verstärkungsschicht aus Kunststoff ausgebaut ist, nur dann sich in der Praxis bewähren kann, wenn die Verbindungselemente, vorzugsweise Muffenverbindungselemente, eine zuverlässige Verbindung mit dem Rohrkörper aufweisen.

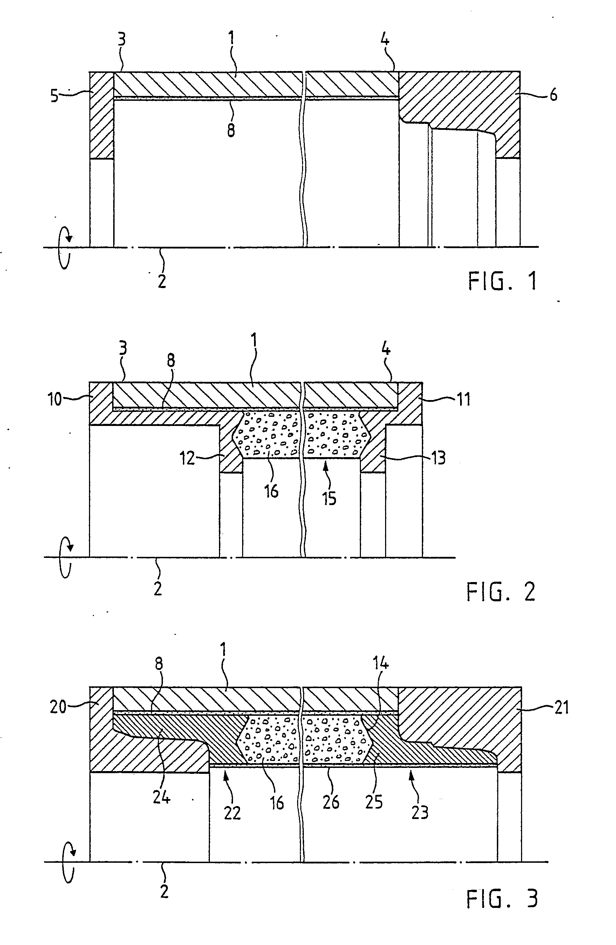

In Fig. 1-4 ist der Aufbau eines solchen Verbundrohres mit Muffenverbindungselementen gezeigt.

In Fig. 1-4 ist mit 1 eine rotierende Trommel bezeichnet, die mit horizontaler Drehachse 2 angeordnet ist und in einem Maschinengestell drehbar gelagert ist. Die Konstruktion der Trommel 1 wird im Hinblick auf das Alter solcher Einrichtungen als bekannt vorausgesetzt.

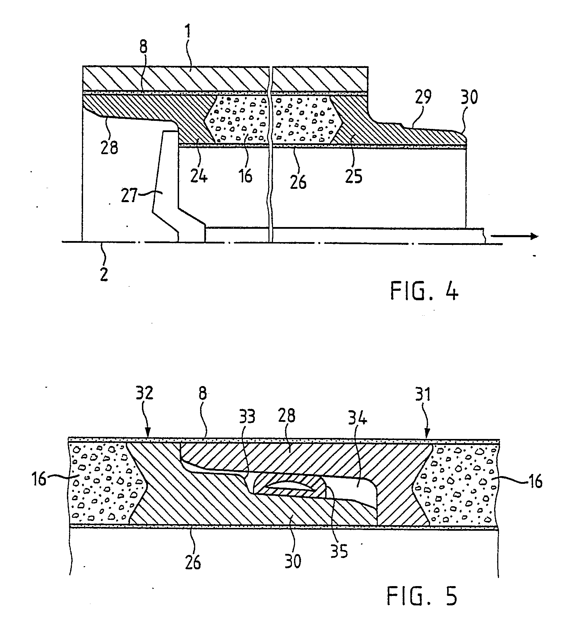

Die Länge der Trommel 1 entspricht der Länge des herzustellenden Rohres, wobei das das eine Rohrende bildende Spitzende, das mit einem Rücksprung versehen ist, über das eine Trommelende herausragt, siehe Fig. 3. Gemäss Figur 1 werden an die beiden Trommelenden 3,4 Abschlussringe 5, 6 angelegt und an der Trommel 1 befestigt. Nun wird die Trommel beschleunigt und vorzugsweise eine Schutzschicht mit Hilfe einer Beschickungsvorrichtung aufgetragen, nach deren Trocknung eine aussenwandseitige Verstärkungsschicht 8 aufgetragen wird. Diese besteht im wesentlichen aus einem Kunststoff, beispielsweise einem Polyester, dem Glasfasern zugemischt sind. Ist die Verstärkungsschicht angetrocknet, werden die Abschlussringe 5, 6 entfernt, und es werden an deren Stelle ein erster Formring 10 und ein zweiter Formring 11 an die Trommelenden 3, 4 angelegt. Die Formringe 10, 11 weisen ins Innere der Trommel ragende ringförmige Partien 12, 13 auf. Diese begrenzen einen Ringraum 15, in welchen eine Kernschicht 16 eingebracht wird. Die Kernschicht 16 besteht aus einem Zementmörtel oder einem Beton mit oder ohne Füllstoffe. Vorgängig des Einbringens der Kernschicht 16 werden Massnahmen getroffen, um eine gute Verbindung zwischen der Verstärkungsschicht 8 mit der Kernschicht 16, z.B. durch einen Kunststoff, zu gewährleisten.

Nachdem die Kernschicht 16 eingebracht und angetrocknet ist, werden die beiden Formringe 10, 11 nach dem Anhalten aus der Trommel entfernt. An deren Stelle werden ein dritter und ein vierter Formring 20, 21 eingesetzt, siehe Figur 3. Es entsteht zwischen der Kernschicht 16 und den beiden Formringen 20, 21 ein freier Ringraum 22, 23, aus dessen Querschnitt bereits geschlossen werden kann, dass es sich um die eigentlichen Muffenverbindungselemente handelt, welche in diesen Ringräumen 22, 23 entstehen. Hierzu wird in die Ringräume 22, 23 eine Muffenmasse 24, 25 eingebracht. Die Muffenmasse entspricht in ihrer Zusammensetzung der Zusammensetzung der aussenwandseitigen Verstärkungsschicht 8, so dass hierbei eine ausgezeichnete Verbindung entsteht. Die Muffenmasse 24, 25 verbindet sich nicht nur mit der Verstärkungsschicht 8, sondern auch mit der stirnseitigen Oberfläche 14 der Kernschicht 16, indem dort eine Verbindungsschicht bestehend aus einem geeigneten Kunststoff angebracht wird.

Auf die Muffenmasse 24, 25 und auf die Kernschicht 16 wird nun die innenwandseitige Verstärkungsschicht 26 aufgebracht und getrocknet. Anschliessend kann noch eine Schutzschicht auf die Verstärkungsschicht 26 aufgebracht werden.

Damit ist die Herstellung des Rohres beendet und die Trommel 1 kann nun angehalten werden. Der dritte und der vierte Formring 20, 21 werden entfernt und es wird eine Ausziehvorrichtung 27, z.B. ein Spreizarm, in die Trommel eingeführt und das fertige Rohr herausgezogen. Wie aus Figur 4 erkennbar ist, weist das Rohr an dem einen Rohrende einen ein Muffenende bildenden Vorsprung 28 auf, während am anderen Rohrende ein mit einem Rücksprung 29 versehenes Spitzende 30 entstanden ist.

In Fig. 5 ist eine Muffenverbindung zweier Rohre dargestellt, die gemäss dem vorstehend beschriebenen Verfahren hergestellt wurden. Das eine Rohr 31 weist ein Muffenende 28 auf, während das anschliessende Rohr 32 ein Spitzende 30 aufweist. Hierbei ist zu beachten, dass das Spitzende 30 eine Schulter 33 aufweist, mit Hilfe welcher das Muffenende 28 zentriert wird. In dem zwischen dem Muffenende 28 und dem Spitzende 30 entstehenden Ringraum 34 wird ein elastischer Dichtungsring 35 eingelegt, der eine tropfdichte Abdichtung der Muffenverbindung 28, 30 gewährleistet. Es sei noch erwähnt, dass teilweise dieselben Formringe für unterschiedliche Aufbauphasen des Rohres verwendet werden können. So ist der Abschlussring 6 gleich ausgebildet wie der vierte Formring 21, jedoch wird nur die Stirnfläche in der ersten Phase gemäss Figur 1 benötigt, um einen Abschluss für die Verstärkungsschicht 8 zu bilden. Weiter könnte der dritte Formring 20 oder der erste Formring 10 als Abschlussring 5 verwendet werden, jedoch muss hierfür der Formring gewendet werden, was die Handhabung erschwert. Aus diesem Grunde ist es zweckmässiger, einen separaten Abschlussring 5 herzustellen.

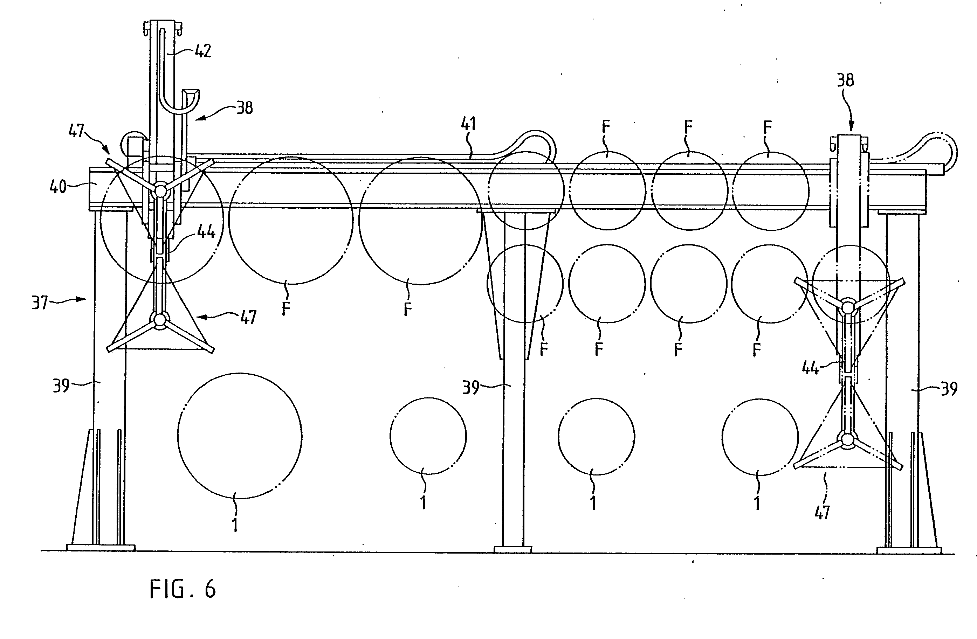

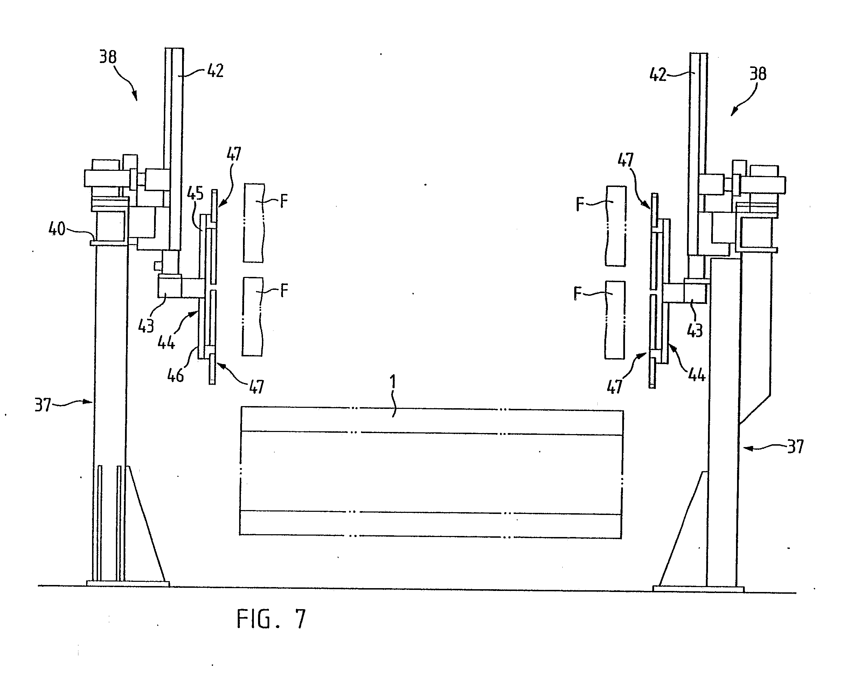

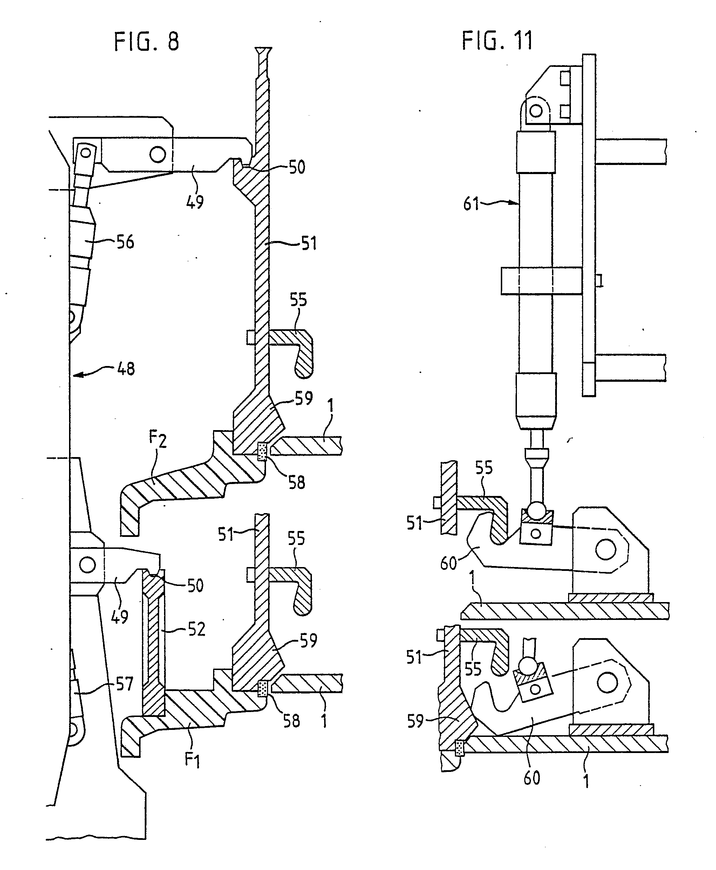

In den Figuren 6-11 ist eine Anlage dargestellt, mit welcher Verbundrohre gemäss den in Figur 1-4 beschriebenen Herstellschritten fabriziert werden können. Wie aus Figur 6 und 7 zu erkennen ist, sind die rotierenden Trommeln 1 nur schematisch angedeutet. Die Zahl der hierbei verwendeten Trommeln 1 pro Anlage hängt lediglich von der Produktionskapazität ab. Die Anordnung der Anlage bleibt im wesentlichen gleich und unabhängig von der Zahl der Trommeln 1.

Gegenüber den Trommelenden ist je ein Portalrahmen 37 angeordnet, auf welchem mindestens ein Handhabungsgerät 38 verfahrbar angeordnet ist. Der Portalrahmen 37 weist je nach der Grösse der Anlage zwei oder mehr Säulen 39 auf, über welche eine Traverse 40 gelegt ist, auf welcher das Handhabungsgerät 38 verfahrbar ist. Das Handhabungsgerät 38 weist hierzu ein Fahrgestell mit einem Fahrmotor auf, welcher über eine Leitung 41 mit Energie, z.B. elektrischer oder pneumatischer Energie, versorgt werden kann.

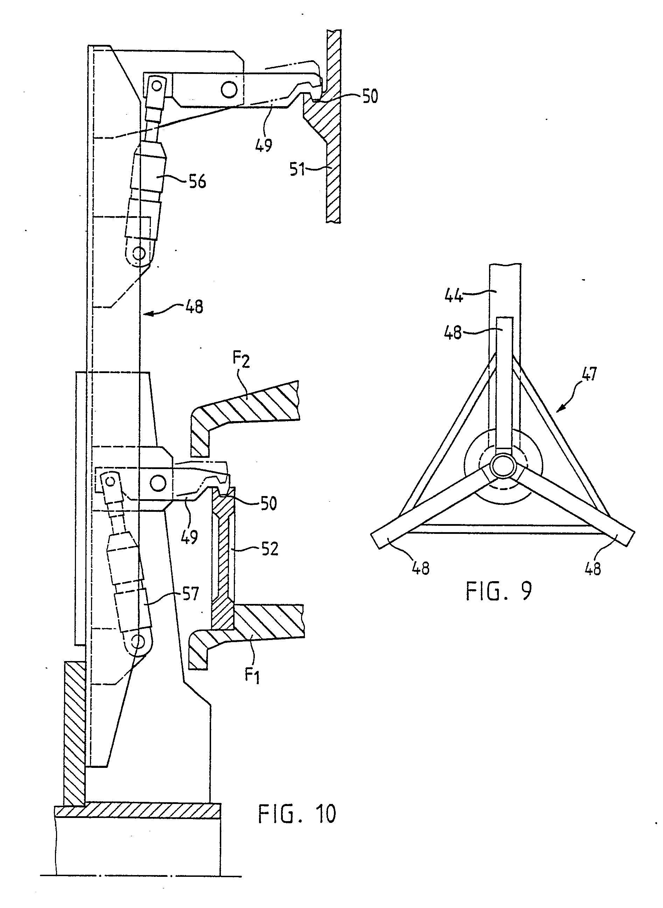

Ueber den Trommeln 1 zur Herstellung der Verbundrohre sind die Formringe (gesamthaft mit F bezeichnet) in einem Magazin (nicht dargestellt) aufbewahrt. Vom Magazin können die Formringe F vom Handhabungsgerät 38 geholt und zu den Trommeln 1 gebracht werden, während umgekehrt nicht mehr benötigte Formringe vom Handhabungsgerät ins Magazin zurückgebracht werden. Zu diesem Zweck weist das Handhabungsgerät 38 eine Hubeinheit 42 auf, an deren unterem Ende 43 (Figur 7) eine Schwenksäule 44 befestigt ist. Die Schwenksäule 44 ist der besseren Uebersicht wegen nur schematisch dargestellt, weist jedoch einen hydraulischen oder pneumatischen Schwenkantrieb auf. An den beiden Armen 46 der Schwenksäule 44 ist je ein Greifer 47 befestigt, der entsprechende Greifmittel aufweist, um die Formringe F festzuhalten (siehe Figur 9). Der Greifer 47 ist mit drei Greifarmen 48 ausgerüstet, an denen mehrere Befestigungsmittel zum Fassen unterschiedlich grosser Formringe angeordnet sind, siehe Fig. 8 und Fig. 10. In Figur 8 sind zwei Formringe F1 und F2 zusammen dargestellt, jedoch ist in Wirklichkeit immer nur ein Formring F am Ende der Trommel 1 befestigt. Für beide Formringe wird jedoch derselbe, in Figur 8 nur schematisch angedeutete Greifarm 48 benützt, welcher zwei schwenkbare Klemmfinger 49 aufweist, die in Klemmnuten 50 eingreifen, die an einem Tragring 51, 52 vorgesehen sind, an denen die Formringe F befestigt sind. An den Tragringen 51, 52, bzw. einem Hilfstragring 53 (bei Formringen mit kleinerem Durchmesser) sind Haltehaken 55 befestigt, mittels welchen die Formringe F an der Trommel 1 angedockt werden, siehe Figur 8. Zur Lagerung der Formringe F im Magazin dienen ausschwenkbare Tragrollen (nicht dargestellt), auf denen die Formringe F am Aussenumfang gelagert werden.

Aus Figur 10 ist ersichtlich, wie die beiden in Figur 8 dargestellten Klemmbacken 49 betätigt werden. Hierzu sind am Greifarm 48 Hubelemente 56, 57 vorgesehen, bei deren Betätigung die Haltehaken 49 entweder geöffnet oder gespannt werden. Die Hubelemente 56, 57 sind mit einem Ende am Greifarm 48 abgestützt, während sie mit dem andern Ende am Klemmbacken 49 angreifen und diesen betätigen.

Es ist noch zu erwähnen, dass am unteren Ende 43 der Hubeinheit 42 eine Vorschubeinrichtung, z.B. ein Verschiebezylinder eingebaut ist, mit welcher die Schwenksäule 44 in die Greifposition für die Formringe F vorgeschoben werden kann. Das Handhabungsgerät 38 kann somit Bewegungen in den drei Achsen des Raumes ausführen, wobei noch zusätzlich eine Schwenkbewegung der Schwenksäule 44 dazukommt. Da die Schwenksäule 44 zwei Greifer 47 trägt, ist es möglich einen Formring aus dem Magazin zu holen und ihn zur betreffenden Trommel zu bewegen, dort den benützten Formring wegzunehmen, die Schwenksäule zu schwenken und den neuen Greifring zu befestigen.

Zum Befestigen der Formringe F an der Trommel 1 dienen die Haltehaken 55 in dem Tragring 51. Der innere Umfang der Tragringe 51 ist mit einer Dichtung 58 und mit einem Anschlagkörper 59 versehen, der am stirnseitigen, angeschrägten Ende der Trommel 1 anliegt.

Zur Befestigung der Formringe F an der Trommel 1 sind an der Aussenseite der Trommel Schwenkklauen 60 angeordnet, welche hinter die Haltehaken 55 eingreifen und den Tragring 51 an der Trommel 1 festhalten. Die Schwenkklauen 60 sind auf der Aussenseite der Trommel 1 schwenkbar gelagert und federbelastet, z.B. durch eine Torsionsfeder, so dass sie von der Aussenseite der Trommel weggedrückt werden. Zum Eingriff der Schwenkklauen 60 in die Haltehaken 55 der Formringe F wird die Schwenkklaue 60 durch ein Hubzylinder-Aggregat 61 niedergedrückt. Dann wird die Schwenksäule 44 nach vorne bewegt, bis die Anschlaggkörper 59 der Formringe F an der Stirnseite der Trommel 1 anliegen. Nun wird das Hubzylinder-Aggregat 61 zurückgezogen, so dass die unter Federdruck stehende Schwenkklaue 60 in den Haltehaken 55 einhaken kann.

Die beschriebene Anlage lässt sich selbsttätig betreiben. Die hierzu verwendete Steuerung weist einen Prozessor auf, welcher programmiert werden kann; damit können beispielsweise gleichzeitig Rohre verschiedener Durchmesser hergestellt werden. Die beiden Handhabungsgeräte 38 an den Enden der Trommel 1 arbeiten im wesentlichen synchron miteinander, da jeweils bei einem Wechsel der Formringe zwei Formringe gewechselt werden müssen. Die Bereitstellung der Beschickungseinrichtungen für die Trommel werden an einem Trommelende angeordnet. Je nach der Zahl der für die Herstellung eines Rohres verwendeten Komponenten sind eine entsprechende Anzahl Beschickungseinheiten vorgesehen, mit denen die einzelnen Komponenten über die Länge der Trommel 1 eingebracht werden. Durch die automatische Beschickung der Trommel 1 und der Steuerung der einzelnen Bewegungen wird erreicht, dass Verbundrohre hergestellt werden können, welche nur verhältnismässig geringe Toleranzen aufweisen. Wesentlich ist, jedoch, dass die automatische Herstellung der Verbundrohre gewährleistet ist und dass die Rohre eine gleichbleibende Qualität aufweisen.

## Ansprüche

1. Verfahren zur Herstellung eines in einer rotierenden Trommel aus mehreren organischen und anorganischen Materialschichten aufgebauten Verbundrohres mit Muffenverbindungselementen an den Rohrenden, welches sowohl aussenwandseitig als auch innenwandseitig mit einer Verstärkungsschicht aus Kunststoff mit einer Faserarmierung und aus einer dazwischen liegenden Kernschicht aus anorganischem Material mit einem Binder, insbesondere Beton versehen ist, dadurch gekennzeichnet, dass gleichzeitig mit dem schichtenweisen Aufbau des Rohrkörpers des Verbundrohres das eine Rohrende mit einem, einen Vorsprung aufweisenden Muffenende und das andere Rohrende mit einem, einen Rücksprung aufweisenden Spitzende versehen werden, wobei für das Formen der Rohrenden eine Muffenmasse verwendet wird, welche derjenigen der Verstärkungsschicht des Rohrkörpers entspricht.

2. Verfahren nach Anspruch 1, dadurch gekennzeichnet, dass das Muffenende und das Spitzende der Muffenverbindungselemente innerhalb der Wandstärke des Verbundrohres angeformt werden.

3. Verfahren nach Anspruch 1 oder 2, dadurch gekennzeichnet, dass das Muffenende und das Spitzende durch an die Trommel befestigte Formringe geformt werden.

4. Verfahren nach Anspruch 1, dadurch gekennzeichnet, dass zunächst die aussenwandseitige Verstärkungsschicht in die Trommel eingebracht wird, wobei die Enden der Trommel durch mit einer Abschlussfläche versehene Ringe (5, 6) begrenzt sind.

5. Verfahren nach Anspruch 4, dadurch gekennzeichnet, dass zum Einbringen der Kernschicht (16) auf die Verstärkungsschicht (8) ein erster und ein zweiter Formring (10, 11) an den Trommelenden befestigt werden, wobei durch diese Formringe die Kernschicht stirnseitig auf eine kleinere Länge als die Trommellänge begrenzt wird.

6. Verfahren nach Anspruch 5, dadurch gekennzeichnet, dass zum Formen der Muffenverbindungselemente ein dritter und ein vierter Formring (20, 21) an dem Trommelende befestigt und der hierdurch entstehende hohle Ringraum (22, 23) zwischen dem Ende der Kernschicht (16) und dem dritten und vierten Formring durch die Muffenmasse ausgefüllt und dann die innenwandseitige Verstärkungsschicht aufgebracht wird.

7. Verfahren nach Anspruch 6, dadurch gekennzeichnet, dass bei angehaltener Trommel das fertigerstellte Verbundrohr durch eine Schubvorrichtung aus der Trommel ausgeschoben wird.

8. Anlage zur Herstellung eines Verbundrohres in einer rotierenden Trommel (1), welches aus mehreren Schichten zusammengesetzt ist, wobei eine aussenwandseitige und eine innenwandseitige Verstärkungsschicht (26) und eine dazwischen liegende Kernschicht (16) angeordnet sind, dadurch gekennzeichnet, dass über mindestens einer liegend gelagerten Trommel (1) die für das Formen der Muffenverbindungselemente (28, 30) an den Rohrenden benötigten Formringe (F) in einem Magazin gelagert sind und durch Handhabungsgeräte (38), von denen an jedem Trommelende mindestens ein Handhabungsgerät (38) aufgestellt ist, nach einander entsprechend dem Aufbau des Verbundrohres zum Trommelende gebracht, auf der Trommel befestigt, ausgewechselt und wieder in das Magazin zurückgebracht werden.

9. Anlage nach Anspruch 8, dadurch gekennzeichnet, dass die Handhabungsgeräte (38) ein auf einer Traverse (40) eines Portalrahmens (37) quer zur Trommelachse verfahrbares Fahrgestell mit einer Hubeinheit (42) ist, deren senkrecht bewegliche Hubstange eine Greifereinheit (44-47) zum Wechseln der Formringe F trägt.

10. Anlage nach Anspruch 9, dadurch gekennzeichnet, dass die Greifereinheit (44-47) parallel zur Trommelachse verschiebbar ist.

11. Anlage nach Anspruch 10, dadurch gekennzeichnet, dass die Greifereinheit (44-47) als eine zweiarmige Schwenksäule (44) ausgebildet ist, an deren beiden Armen (44, 46) je ein Greifer (47) befestigt ist.

12. Anlage nach Anspruch 11, dadurch gekennzeichnet, dass der Greifer (3) sternförmig angeordnete Greifarme (48) aufweist, an denen schwenkbare, durch Hubelemente (56, 57) betätigbare Klemmbacken (49) zum Fassen der Formringe (F) gelagert sind.

13. Anlage nach Anspruch 8, dadurch gekennzeichnet, dass die Formringe F mit einem Tragring (51, 52) verbunden sind, an denen Klemmnuten (50) zum Eingriff für die Klemmbacken (49) vorgesehen sind.

14. Anlage nach Anspruch 8, dadurch gekennzeichnet, dass am Aussenumfang der beiden Enden der Trommel (1) Schwenkklauen (60) befestigt sind, die an den Tragringen (51, 53) befestigte Haltehaken (55) hintergreifen.

15. Anlage nach Anspruch 14, dadurch gekennzeichnet, dass die Schwenkklauen (60) durch Hubzylinderaggregate (61), welche an einem ortsfesten Rahmen um die Trommel (1) angeordnet sind aus dem Eingriff mit dem Haltehaken (55) gedrückt werden.

FIG. 1

FIG. 2

FIG. 3

FIG. 4

FIG. 5

FIG. 6

EP 0 374 667 A1

FIG. 7

EP 0 374 667 A1

FIG. 10

FIG. 9

FIG. 8

FIG. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-1 592 936 (CENTRE DE RECHERCHES DE PONT-A-MOUSSON) * Insgesamt * | 1,2 | B 28 B 21/80 B 28 B 21/56 F 16 L 21/00 F 16 L 9/08 F 16 L 25/00 |
| A | --- | 8 | |
| Y | DE-A-3 110 092 (HITACHI SHIPBUILDING & ENGINEERING) * Insgesamt * | 1,2 | |
| A | --- | 4,8 | |
| Y | BE-A- 661 826 (BRAAS & CIE GmbH) * Insgesamt * | 2 | |
| A | US-A-4 449 912 (M. OGURA) * Insgesamt * | 1-15 | |
| A | DE-A-1 942 006 (FRADERA PELLICER CO.) * Insgesamt * | 1,4,5,8 ,14 | |
| A | FR-A-2 157 118 (EAU ET ASSAINISSEMENT SOCEA) * Insgesamt * | 1-8 | RECHERCHIERTE SACHGEBIETE (Int. Cl.5) |
| A | NL-A-7 308 257 (NIJMEEGSE BETONINDUSTRIE "DE HAMER" B.V.) * Figuren 1-7 * | 1,8-12 | B 28 B B 29 C B 29 D F 16 L |
| A | US-A-3 237 954 (M.J. FRANKLIN) * Insgesamt * | 1,8 | |
| A | DE-A-2 600 415 (UNITED STATES PIPE AND FOUNDRY CO.) * Insgesamt * ----- | 1,8 | |

Der vorliegende Recherchenbericht wurde für alle Patentansprüche erstellt

| Recherchenort | Abschlußdatum der Recherche | Prüfer |
|---|---|---|
| DEN HAAG | 05-03-1990 | GOURIER P.A. |